(19) Europäisches Patentamt / European Patent Office / Office européen des brevets

(11) **EP 3 161 950 B1**

(12) **FASCICULE DE BREVET EUROPEEN**

(45) Date de publication et mention de la délivrance du brevet:
**27.04.2022 Bulletin 2022/17**

(21) Numéro de dépôt: **15735997.7**

(22) Date de dépôt: **29.06.2015**

(51) Classification Internationale des Brevets (IPC):
**H02M 3/156** (2006.01)    **H02M 3/335** (2006.01)
**H02M 3/337** (2006.01)    **H02M 3/158** (2006.01)
**H02M 3/28** (2006.01)    **H02M 1/00** (2006.01)

(52) Classification Coopérative des Brevets (CPC):
**H02M 3/3376; H02M 3/156; H02M 3/33592;**
H02M 1/0058; H02M 1/007; H02M 3/1586;
H02M 3/1588; H02M 3/285; Y02B 70/10

(86) Numéro de dépôt international:
**PCT/FR2015/051751**

(87) Numéro de publication internationale:
**WO 2016/001547 (07.01.2016 Gazette 2016/01)**

(54) **CONVERTISSEUR DE TENSION COMPRENANT UN CIRCUIT CONVERTISSEUR DC/DC ISOLÉ**

SPANNUNGSWANDLER MIT EINER ISOLIERTEN GLEICHSTROMWANDLERSCHALTUNG

VOLTAGE CONVERTER COMPRISING AN ISOLATED DC/DC CONVERTER CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2014 FR 1456226**

(43) Date de publication de la demande:
**03.05.2017 Bulletin 2017/18**

(73) Titulaire: **Valeo Siemens eAutomotive France SAS 95800 Cergy (FR)**

(72) Inventeur: **BENDANI, Larbi F-60110 Meru (FR)**

(74) Mandataire: **Novembre, Christophe Adelphe Valeo Siemens eAutomotive France SAS 14 avenue des Béguines 95892 Cergy Pontoise (FR)**

(56) Documents cités:
EP-A2- 1 763 124    FR-A1- 2 921 210
JP-A- H08 228 486    US-A1- 2011 292 688
US-A1- 2013 336 017

• Marian K. Kazimierczuk: "Chapter 13: Current-mode Control" In: "Pulse-Width Modulated DC-DC Power Converters", 16 septembre 2008 (2008-09-16), John Wiley & Sons, Ltd., U.K., XP055174330, ISBN: 978-0-47-069464-0 pages 511-570, DOI: 10.1002/9780470694640.ch13, le document en entier
• James P. Johnson: "Chapter 11: DC-DC Converters" In: "Handbook of Automotive Power Electronics and Motor Drives", 2005, CRC Press, XP055174704, ISSN: 2155-5192 ISBN: 978-1-42-002815-7 pages 231-254, DOI: 10.1201/9781420028157.pt3, Section 11.3
• None

EP 3 161 950 B1

## Description

La présente invention concerne un convertisseur de tension comprenant un circuit convertisseur DC/DC isolé, un dispositif de conversion de tension comprenant un entrelacement de convertisseurs selon l'invention, ainsi qu'un procédé de conversion de tension mis en œuvre avec le convertisseur selon l'invention.

Les convertisseurs DC/DC (pour « direct current/direct current » en anglais) isolés peuvent présenter des commutations à zéro de tension ou ZVS (pour « zero voltage switching » en anglais) ou des commutations à zéro de courant ou ZCS (pour « zero current switching » en anglais) qui permettent de réduire les pertes par commutation lors de la conversion de tension. Ces convertisseurs sont donc particulièrement avantageux dans une application automobile où la ressource en énergie est limitée. Dans un véhicule, on peut utiliser un convertisseur de tension pour adapter des niveaux de tension entre plusieurs réseaux électriques du véhicule ou pour convertir une tension entre une source d'énergie et un consommateur électrique embarqué dans le véhicule.

On connaît du document US 2013/0336017 AI un convertisseur élévateur de tension en amont d'un convertisseur résonant. Le convertisseur élévateur de tension est contrôlé pour réguler la tension de sortie du convertisseur résonant, qui est piloté avec une fréquence et un rapport cyclique fixes. Au dessus d'un seuil de tension d'entrée du convertisseur, la fréquence du convertisseur résonant est variée pour réguler la tension de sortie du convertisseur.

On connait un convertisseur de tension DC/DC isolé du brevet US5754413, illustré en figure 1. Le convertisseur comprend deux interrupteurs, agencés en demi-pont, qui sont connectés en leur point milieu à une branche qui comprend deux transformateurs en série. Les interrupteurs contrôlent la transmission d'énergie à travers les transformateurs pour obtenir une conversion d'une tension d'entrée du convertisseur en une tension de sortie. Des diodes connectées aux secondaires des transformateurs permettent de redresser le signal de sortie. La tension de sortie est obtenue en contrôlant le rapport cyclique des interrupteurs. En modifiant le rapport cyclique pour atteindre une valeur cible de tension de sortie, on ajuste le gain du convertisseur pour atteindre la valeur cible de tension de sortie. En particulier, lorsque la tension d'entrée du convertisseur DC/DC isolé varie, il est connu de faire varier le rapport cyclique des interrupteurs du convertisseur DC/DC isolé pour réguler sa tension de sortie, c'est-à-dire maintenir sa tension de sortie à une valeur souhaitée.

Cependant, le stress en tension des diodes de redressement est fonction du rapport cyclique des interrupteurs du convertisseur. Ce stress peut devenir important lorsque le rapport cyclique devient proche de 0% ou 100%. Pour limiter le stress en tension des diodes de redressement, il est prévu, pour les deux transformateurs, des rapports de transformations respectifs qui sont différents. Mais cela complique la conception du convertisseur car les transformateurs ne peuvent pas être identiques et le courant au secondaire présente des discontinuités.

En outre, en travaillant avec un rapport cyclique variable, les ondulations de courant en sortie peuvent varier fortement entrainant une variation du rendement du convertisseur. Pour conserver un fonctionnement avec un bon rendement, le rapport cyclique doit être peu variable. Or, dans un véhicule, la tension d'une source d'énergie, telle qu'une batterie, peut varier fortement suivant l'énergie disponible. Une telle variation en entrée du convertisseur implique de faire varier le rapport cyclique de manière correspondante, ce qui limite l'utilisation du convertisseur DC/DC isolé dans un véhicule.

Il est donc recherché une solution pour améliorer les performances d'un convertisseur DC/DC isolé de façon à permettre son utilisation dans un véhicule automobile.

Afin de résoudre ce problème, l'invention concerne un dispositif de conversion de tension selon la revendication 1, le dispositif de conversion de tension comprenant au moins deux convertisseurs de tension, chaque convertisseur de tension comprenant :

- un circuit convertisseur DC/DC isolé ayant des interrupteurs dont des successions d'ouverture et de fermeture avec un rapport cyclique permettent de transmettre une énergie à travers le convertisseur DC/DC isolé ;
- un circuit de régulation de la tension d'entrée du circuit convertisseur DC/DC isolé ;
  et dans lequel le circuit de régulation et le circuit convertisseur DC/DC isolé sont configurés de sorte que :

  - sur une première gamme de fonctionnement d'entrée-sortie du convertisseur, le circuit de régulation contrôle la tension de sortie du circuit convertisseur DC/DC isolé en modifiant la tension délivrée au circuit convertisseur DC/DC isolé, le rapport cyclique du circuit convertisseur DC/DC isolé restant sensiblement égal à une première valeur ; et,
  - sur une deuxième gamme de fonctionnement d'entrée-sortie du convertisseur, le circuit convertisseur DC/DC isolé contrôle sa tension de sortie en modifiant son rapport cyclique.

Grâce au circuit de régulation, sur la première gamme de fonctionnement d'entrée-sortie, une valeur souhaitée de tension en sortie du circuit convertisseur DC/DC isolé est obtenue en ajustant la tension d'entrée du circuit convertisseur DC/DC isolé. A chaque valeur de tension souhaitée en sortie du circuit convertisseur DC/DC isolé correspond une valeur de tension d'entrée du circuit convertisseur DC/DC isolé. Une valeur de tension de sortie souhaitée est obtenue sans modifier le rapport cyclique du circuit convertisseur DC/DC isolé. Le rapport cyclique peut donc être fixé à une valeur qui permet un rendement maximal. Ainsi, sur la première gamme de fonctionnement d'entrée-sortie, à une tension de sortie donnée du circuit convertisseur DC/DC isolé, le circuit de régulation permet un fonctionnement du circuit convertisseur DC/DC isolé avec un rapport cyclique constant pour une tension d'entrée quelconque.

Sur la première gamme de fonctionnement d'entrée-sortie, le rapport cyclique des interrupteurs du circuit convertisseur DC/DC isolé reste donc constant à une incertitude près.

Sur la deuxième gamme de fonctionnement d'entrée-sortie, le rapport cyclique du circuit convertisseur DC/DC isolé est modifié, ce qui permet par exemple d'atteindre des valeurs d'entrée-sortie qui ne sont pas comprises dans la première gamme de fonctionnement.

En particulier, le circuit de régulation comprend des interrupteurs et est tel que, sur la première gamme de fonctionnement, son rapport cyclique est ajusté pour obtenir une valeur de tension en sortie du circuit de régulation, c'est-à-dire en entrée du circuit convertisseur DC/DC isolé. Cette valeur de tension est ajustée pour obtenir une valeur de tension souhaitée en sortie du circuit convertisseur DC/DC isolé. Sur la deuxième gamme de fonctionnement, le rapport cyclique du circuit de régulation peut rester constant de façon à délivrer une tension d'entrée constante au circuit convertisseur DC/DC isolé quelque soit la valeur de tension souhaitée en sortie du circuit convertisseur DC/DC isolé.

Le circuit de régulation délivre son signal de sortie en entrée du circuit convertisseur DC/DC isolé. A cet effet, le circuit convertisseur DC/DC isolé peut être en cascade du circuit de régulation. Le circuit convertisseur DC/DC isolé est notamment connecté directement en aval du circuit de régulation. En particulier, la sortie du convertisseur correspond à la sortie du circuit convertisseur DC/DC isolé.

Notamment, le circuit de régulation est configuré pour délivrer une tension au circuit convertisseur DC/DC isolé à partir, directement ou indirectement, d'une tension d'entrée du convertisseur de tension.

Le convertisseur de tension peut être un convertisseur continu-continu configuré pour convertir une tension d'entrée continue en une tension de sortie continue.

Le convertisseur de tension peut être un convertisseur alternatif-continu configuré pour convertir une tension alternative en une tension continue. Avantageusement, le convertisseur de tension comprend alors un circuit convertisseur alternatif-continu en amont du circuit de régulation ou un circuit convertisseur continu-alternatif en aval du circuit convertisseur DC/DC isolé. Par des adaptations adéquates, le convertisseur de tension peut être un convertisseur alternatif-alternatif.

Selon un mode de réalisation, le circuit convertisseur DC/DC isolé est configuré de sorte que la première valeur de rapport cyclique est sensiblement égale à 50%. A un rapport cyclique de 50%, le courant en sortie du circuit convertisseur DC/DC isolé présente des ondulations (« ripples » en anglais) qui sont faibles car les ondulations des courants dans des inductances magnétisantes du circuit convertisseur DC/DC isolé sont compensées.

Selon l'invention, le circuit convertisseur DC/DC isolé est configuré pour contrôler sa tension de sortie lorsque la tension d'entrée du convertisseur est supérieure ou égale à un seuil et la tension souhaitée en sortie du convertisseur est inférieure ou égale à un seuil. Autrement dit, la deuxième gamme de fonctionnement d'entrée-sortie correspond à des tensions d'entrée supérieures ou égales à un seuil et à des tensions souhaitées en sortie du circuit convertisseur DC/DC isolé inférieures ou égale à un seuil.

En particulier, la première gamme de fonctionnement d'entrée-sortie correspond à une première plage de tension d'entrée du convertisseur comprise entre une valeur minimale et une valeur maximale ; et à une première plage de tension de sortie comprise entre une valeur minimale et une valeur maximale. Par exemple, la différence entre la valeur minimale et la valeur maximale de la tension d'entrée du convertisseur est comprise entre 150 et 500V. Par exemple, la valeur minimale de la tension d'entrée est comprise entre 150 et 200 V, voire entre 100 et 200V ; et la valeur maximale de la tension d'entrée est comprise entre 400 et 500V, voire entre 400 et 650V. Par exemple, la valeur minimale de la tension de sortie est comprise entre 8 et 14V et la valeur maximale de la tension de sortie est comprise entre 15 et 18V. En particulier, la première plage de tension de sortie du convertisseur est comprise entre 12 et 16V.

En particulier, la valeur maximale de la tension d'entrée sur la première gamme de fonctionnement est égale au seuil de tension d'entrée de la deuxième gamme de fonctionnement ; et la valeur minimale de la tension de sortie sur la première gamme de fonctionnement est égale au seuil de tension de sortie sur la deuxième gamme de fonctionnement.

Selon un mode de réalisation, le circuit de régulation est un convertisseur DC/DC de type élévateur (« boost » en anglais).

Selon un mode de réalisation, le circuit de régulation et le circuit convertisseur DC/DC isolé sont dans un seul module. En particulier, le circuit de régulation et le circuit convertisseur DC/DC isolé sont dans un même boitier d'un module électronique ou sur une même carte électronique du module.

Selon l'invention, le convertisseur comprend un circuit destiné à implémenter une première boucle de façon à asservir une consigne d'un paramètre électrique d'un signal du circuit de régulation à une différence entre la valeur de la tension de sortie du circuit convertisseur DC/DC isolé et une consigne de tension de sortie du circuit convertisseur DC/DC isolé, la consigne du paramètre électrique étant telle que le circuit de régulation délivre au circuit convertisseur DC/DC isolé une valeur de tension d'entrée correspondant à une valeur respective de tension de sortie du circuit convertisseur DC/DC isolé.

Selon une variante, le convertisseur comprend un circuit destiné à implémenter une deuxième boucle de façon à asservir le paramètre électrique du signal du circuit de régulation à une différence entre la valeur du paramètre électrique et la consigne du paramètre électrique.

Selon une variante, le signal du circuit de régulation est le signal délivré par le circuit de régulation, ou un signal circulant dans le circuit de régulation.

Selon une variante, le paramètre électrique du signal est son courant ou sa tension.

Ainsi, dans une variante, le circuit est destiné à implémenter la première boucle de façon à asservir le courant délivré par le circuit de régulation, ou un courant circulant dans le circuit de régulation, à une différence entre la valeur de la tension de sortie du circuit convertisseur DC/DC isolé et une consigne de tension de sortie du circuit convertisseur DC/DC isolé.

En particulier, le circuit de la première boucle et/ou de la seconde boucle asservissent le paramètre électrique en asservissant des interrupteurs compris dans le circuit de régulation, notamment en asservissant un rapport cyclique d'ouverture ou de fermeture des interrupteurs.

Selon l'invention, le circuit convertisseur DC/DC isolé comprend au moins un premier et un deuxième transformateurs d'isolation en série, les interrupteurs permettant de transmettre une énergie à travers le convertisseur DC/DC isolé par l'intermédiaire des transformateurs.

Selon un mode de réalisation, le circuit convertisseur DC/DC est configuré pour que :

- sur une première partie d'une période de fonctionnement, le primaire du premier transformateur réalise une inductance stockant de l'énergie et le primaire du second transformateur transfère une énergie vers le secondaire du second transformateur ;
- sur une deuxième partie de la période de fonctionnement, le primaire du second transformateur réalise une inductance stockant de l'énergie, et le primaire du premier transformateur transfère une énergie vers le secondaire du premier transformateur.

Selon un mode de réalisation, le circuit convertisseur DC/DC est configuré pour que :

- sur une première partie d'une période de fonctionnement, le primaire du premier transformateur réalise une inductance permettant une commutation douce des interrupteurs et le primaire du second transformateur transfère une énergie vers le secondaire du second transformateur ;
- sur une deuxième partie de la période de fonctionnement, le primaire du second transformateur réalise une inductance permettant une commutation douce des interrupteurs, et le primaire du premier transformateur transfère une énergie vers le secondaire du premier transformateur.

Selon un mode de réalisation, une inductance magnétisante d'au moins un transformateur est configurée de sorte qu'à la première valeur de rapport cyclique un courant magnétisant circulant dans le transformateur permette une commutation douce des interrupteurs du convertisseur DC/DC isolé.

Selon un mode de réalisation, la sortie du circuit de régulation est connectée au circuit convertisseur DC/DC isolé au niveau d'une branche du circuit convertisseur DC/DC isolé comprenant au moins une partie des interrupteurs du circuit convertisseur DC/DC isolé.

Selon un mode de réalisation, la sortie du circuit de régulation est connectée à une branche du circuit convertisseur DC/DC isolé comprenant lesdits transformateurs.

Selon un mode de réalisation, les interrupteurs et les primaires du circuit convertisseur DC/DC isolé forment une structure en demi-pont. Alternativement, les interrupteurs et les primaires du circuit convertisseur DC/DC isolé forment une structure en pont complet, ou ont toute autre configuration permettant un fonctionnement du circuit convertisseur DC/DC isolé.

Selon un mode de réalisation, au moins un des interrupteurs comprend une capacité en parallèle.

L'invention concerne un dispositif de conversion de tension comprenant au moins deux convertisseurs de tension selon l'invention, les deux convertisseurs étant entrelacés ; et dans lequel les circuits de régulation sont configurés pour fonctionner avec un déphasage de $2\pi/n$, et les circuits convertisseurs DC/DC isolés sont configurés pour fonctionner avec un déphasage de $\pi/n$, n étant le nombre de convertisseurs de tension entrelacés.

Selon l'invention, les convertisseurs de tension partagent un seul circuit destiné à implémenter la première boucle, de sorte que les circuits de régulation reçoivent la même consigne. L'invention concerne également un procédé de conversion de tension selon la revendication 3. - Le contrôle de la tension de sortie du circuit convertisseur DC/DC isolé comprend la modification d'une tension délivrée par le circuit de régulation au niveau d'une branche du circuit convertisseur DC/DC isolé comprenant au moins une partie des interrupteurs du circuit convertisseur DC/DC isolé.

Selon un mode de réalisation, le contrôle de la tension de sortie du circuit convertisseur DC/DC isolé comprend la modification d'une tension délivrée par le circuit de régulation au niveau d'une branche du circuit convertisseur DC/DC isolé comprenant les transformateurs du circuit convertisseur DC/DC isolé.

L'invention sera mieux comprise en faisant référence aux dessins, dans lesquels :

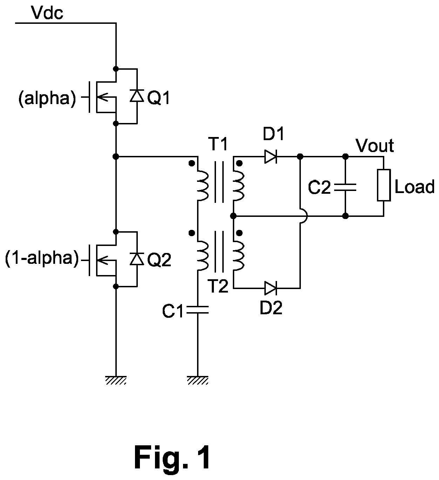

- la figure 1 illustre un exemple de convertisseur de tension DC/DC isolé selon l'art antérieur ;
- les figures 2 à 7 illustrent chacune un exemple de convertisseur de tension DC/DC ;
- la figure 8 représente un graphe du gain en fonction du rapport cyclique dans un convertisseur de tension DC/DC isolé selon l'invention ;
- la figure 9 illustre un exemple de procédé de commande d'un dispositif de conversion comprenant un entrelacement de convertisseurs selon l'invention.

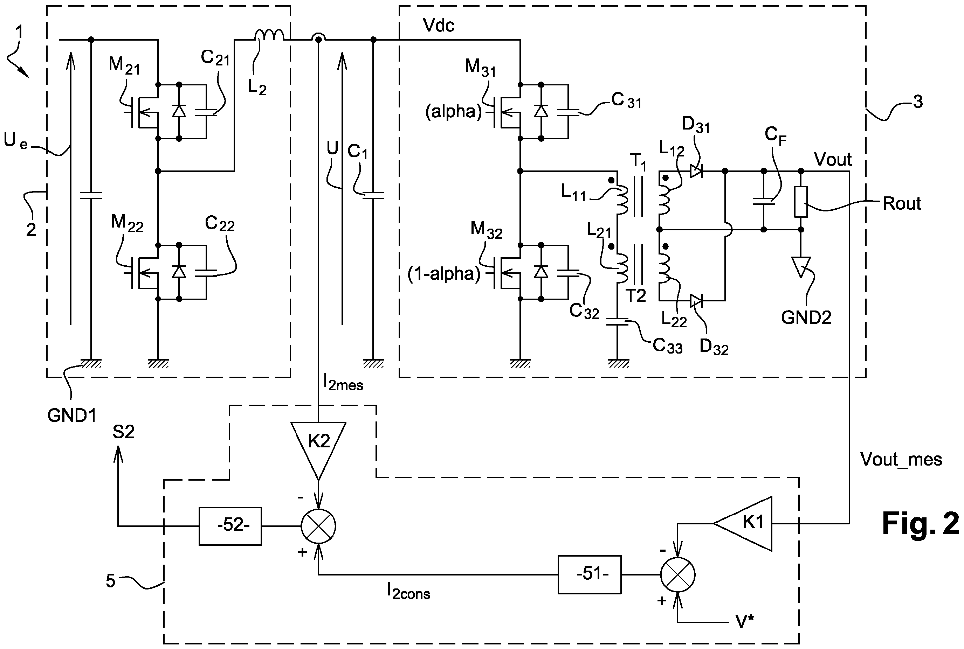

Le convertisseur de tension sera mieux compris en faisant référence à la figure 2.

Le convertisseur 1 comprend un circuit convertisseur DC/DC isolé 3 et un circuit 2 de régulation de la tension d'entrée du circuit convertisseur DC/DC isolé 3. Les circuits 2, 3 comprennent des interrupteurs M21, M22, M31, M32 dont une succession d'ouvertures et de fermetures permettent de contrôler le signal de sortie de ces circuits. Ces interrupteurs peuvent être des transistors, tels que des transistors MOSFET, IGBT, ou autres. Les circuits 2, 3 peuvent être réalisés à partir d'un matériau semiconducteur tel que du silicium (Si), du nitrure de gallium (GaN), du carbure de silicium (SiC), ou tout autre matériau semiconducteur.

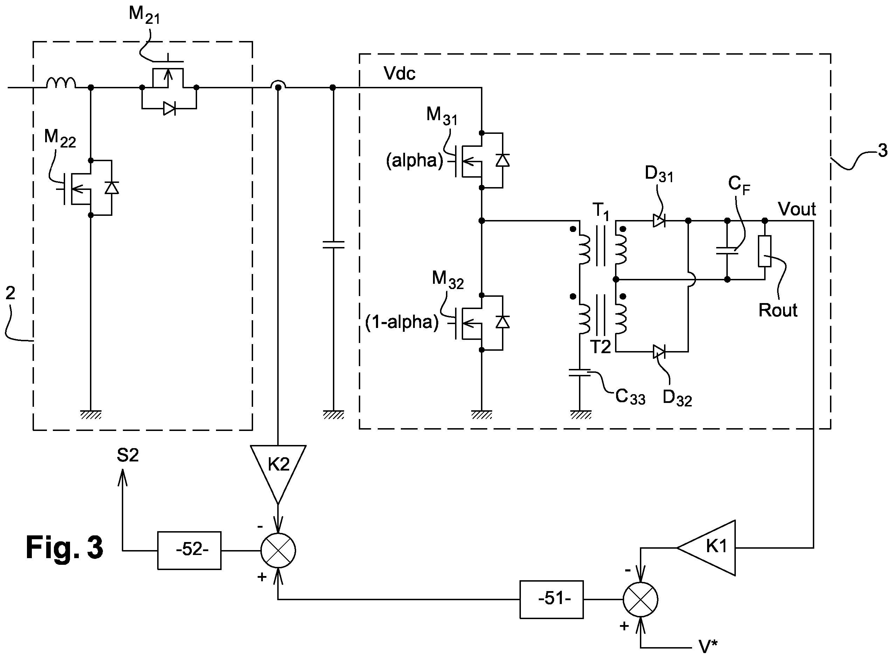

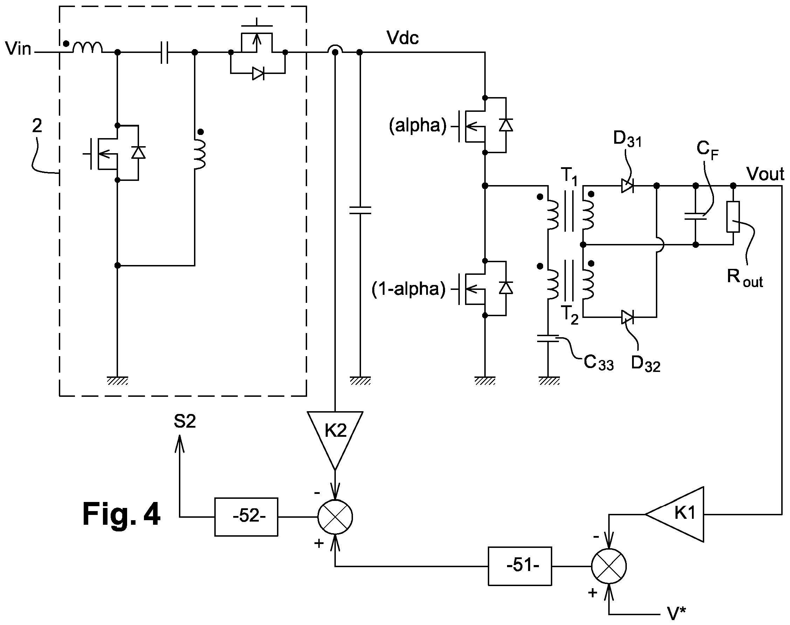

Dans l'exemple considéré, le circuit de régulation 2 est un convertisseur DC/DC abaisseur, cependant il pourrait être d'un autre type de convertisseur DC/DC comme illustré en figures 3 et 4. Le circuit de régulation 2 comprend deux interrupteurs M21, M22 en série. L'interrupteur M21, dit interrupteur côté haut, est connecté à la borne haute d'une source de tension (non représentée). L'interrupteur M22, dit interrupteur côté bas, est connecté à la borne basse de la source de tension. Cette borne basse correspond notamment à une première masse GND1 du convertisseur 1. Chaque interrupteur M21, M22, peut comprendre un transistor en parallèle avec une diode de roue libre.

Chaque interrupteur M21, M22 comprend une capacité C21, C22 en parallèle. Ces capacités C21, C22 servent à faire une commutation à zéro de tension ou ZVS (pour « Zero Voltage Switching » en anglais) lors de l'ouverture des interrupteurs. Pendant l'ouverture d'un interrupteur M21, M22 on récupère l'énergie stockée dans une inductance pour décharger et recharger la capacité C21, C22 qui est aux bornes de l'interrupteur. Une fois que la tension est proche de 0V on vient commander l'interrupteur et ainsi on réalise une commutation sous zéro de tension, ce qui réduit fortement les pertes en commutation.

Une inductance L2 a une première borne connectée au point milieu des deux interrupteurs M21, M22, et une deuxième borne connectée à l'entrée du circuit convertisseur DC/DC isolé 3.

Une capacité C1 est connectée entre la deuxième borne de l'inductance L2 et la première masse GND1 du convertisseur 1. Cette capacité C1 permet par exemple de faire l'interface entre les circuits 2, 3.

Le circuit convertisseur DC/DC isolé 3 comprend deux interrupteurs M31, M32 en série, de préférence identiques. Les interrupteurs M31, M32 comprennent des diodes et des capacités C31, C32 similaires aux diodes et aux capacités C21, C22 décrites précédemment pour les interrupteurs M21, M22. Le point milieu entre les deux interrupteurs M31, M32 est connecté à une branche qui comprend deux transformateurs d'isolation T1, T2 en série. Chaque transformateur T1, T2 comprend un primaire L11, L21 et un secondaire L12, L22. Les primaires L11, L21 et les secondaires L12, L22 sont respectivement en série. Le point milieu des interrupteurs M31, M32 est connecté aux primaires L11, L21. Une capacité C33 est comprise entre les transformateurs T1, T2 et la première masse GND1. Les secondaires L12, L22 sont en série avec leur point milieu connecté à une seconde masse GND2 du convertisseur de tension 1.

Des diodes D31, D32 sont connectées aux secondaires L12, L22 pour redresser le signal issu des transformateurs T1, T2. A cet effet, une diode D31 a son anode connectée à une borne d'un secondaire L12 et l'autre diode D32 a son anode connectée à une borne de l'autre secondaire L22, ces bornes étant différentes du point milieu des deux secondaires L12, L22. Les diodes D31, D32 pourraient être avantageusement remplacées par des interrupteurs, notamment des transistors, tels que des transistors MOSFET, IGBT ou autres, afin d'obtenir par exemple un redressement synchrone en sortie des transformateurs T1, T2. Pour des applications à fort courant au secondaire l'usage de MOSFET à la place des diodes permet d'améliorer le rendement global du convertisseur 1.

La sortie du circuit convertisseur DC/DC isolé 3 est prise entre la borne des diodes D31, D32 qui n'est pas connectée aux secondaires L12, L22 et qui est commune aux deux diodes D31, D32 et la seconde masse GND2.

Le convertisseur de tension 1 comprend une capacité CF pour filtrer le signal délivré par le circuit convertisseur DC/DC isolé 3.

Les interrupteurs M31, M32 du circuit convertisseur DC/DC isolé 3 ont un rapport cyclique qui permet de transférer une énergie à travers les transformateurs T1, T2.

Sur une première partie d'une période de fonctionnement, l'interrupteur M31 est fermé et l'interrupteur M32 est ouvert. Le primaire L11 du premier transformateur T1 réalise une inductance permettant une commutation douce des interrupteurs M31, M32 et le primaire L21 du second transformateur T2 transfère une énergie vers le secondaire L22 du second transformateur T2.

Sur une deuxième partie de la période de fonctionnement, le primaire L21 du second transformateur T2 réalise une inductance permettant une commutation douce des interrupteurs M31, M32, et le primaire L11 du premier transformateur T1 transfère une énergie vers le secondaire L12 du premier transformateur T1. Les durées des première et deuxième parties de fonctionnement sont définies par le rapport cyclique a des interrupteurs M31, M32.

Les interrupteurs M31, M32 fonctionnent avec un rapport cyclique a qui ne varie pas, c'est-à-dire qui reste constant au cours du temps. Lors du fonctionnement du convertisseur 1, la tension de sortie Vout du circuit convertisseur DC/DC isolé 3 est contrôlée par la tension délivrée par le circuit de régulation 2, c'est-à-dire en entrée du circuit convertisseur DC/DC isolé 3. A cet effet, le convertisseur 1 comprend une unité de commande 5 du circuit de régulation 2. L'unité de commande 5 délivre un signal S2 de modulation en largeur d'impulsion ou PWM (pour « puise width modulation » en anglais) qui commande l'ouverture et la fermeture des interrupteurs M21, M22 du circuit de régulation 2 pour contrôler le signal électrique délivré par le circuit de régulation 2. Les interrupteurs M21, M22 sont commandés de sorte que la tension délivrée en entrée du circuit convertisseur DC/DC isolé 3, c'est-à-dire en sortie du circuit de régulation 2, permette d'obtenir une valeur de tension souhaitée en sortie du circuit convertisseur DC/DC isolé 3. Ainsi, contrairement à l'art antérieur, il n'est pas nécessaire de faire varier le rapport cyclique a du circuit convertisseur DC/DC isolé 3. Le circuit convertisseur DC/DC isolé 3 peut donc fonctionner à son rapport cyclique le plus avantageux, notamment à 50%.

Les stress en tension aux bornes des diodes D31, D32 sont fonction du rapport cyclique a, et sont donnés par les expressions suivantes :

$$V(D31) = Vout/(1 - \alpha) \text{ et } V(D32) = Vout/\alpha$$

Le rapport cyclique a est de préférence égal à 50%. Ainsi, les stress en tension aux bornes de deux diodes D31, D32 sont égaux, l'usure est la même entre les diodes. En outre, à un rapport cyclique de 50%, les ondulations de courant dues aux inductances magnétisantes des transformateurs T1,T2 sont compensées entre elles. Ainsi, le courant aux secondaires L12, L22 est continu.

Plus particulièrement, les inductances magnétisantes des transformateurs T1, T2 sont telles qu'au rapport cyclique constant, égal notamment à 50%, un courant magnétisant circulant dans les transformateur T1, T2 permette une commutation douce des interrupteurs M31, M32 du convertisseur DC/DC isolé 3.

En particulier, lorsque la tension d'entrée Ue du convertisseur de tension 1 varie, le circuit de régulation 2 permet de s'assurer que la tension U en entrée du circuit convertisseur DC/DC isolé 3 garde une valeur qui permet d'obtenir la tension de sortie Vout désirée. Ainsi, si la tension d'entrée Ue du convertisseur 1 change de valeur, l'unité de commande 5 modifie de façon correspondante la commande des rapports cycliques des interrupteurs M21, M22 pour maintenir la tension U en sortie du circuit de régulation 2, c'est-à-dire en entrée du convertisseur DC/DC isolé 3. Ceci est particulièrement avantageux dans un véhicule électrique où le niveau de charge d'une batterie peut varier au cours du temps.

Plus particulièrement, l'unité de commande 5 réalise une première boucle d'asservissement du courant délivré par le circuit de régulation 2 à une différence entre la valeur Vout mes de la tension de sortie du circuit convertisseur DC/DC isolé 3 et une tension Vout souhaitée en sortie du circuit convertisseur DC/DC isolé 3. A cet effet, l'unité de commande 5 reçoit la tension Vout mes mesurée en sortie du circuit convertisseur DC/DC isolé 3, éventuellement multipliée par un gain K1. L'unité de commande 5 compare ensuite une consigne de tension V* avec la tension Vout mes mesurée. La consigne de tension V* correspond à la tension Vout souhaitée en sortie du circuit convertisseur DC/DC isolé 3. En fonction du résultat de la comparaison, un contrôleur 51 délivre une consigne de courant I2cons au circuit de régulation 2 de façon à obtenir une tension U attendue en sortie du circuit de régulation 2, c'est-à-dire en entrée du circuit convertisseur DC/DC isolé 3. La consigne de courant I2cons est telle que le circuit de régulation 2 délivre au circuit convertisseur DC/DC isolé 3 la valeur de tension d'entrée U correspondant à la valeur de tension Vout respective attendue en sortie du circuit convertisseur DC/DC isolé 3.

La première boucle d'asservissement pourrait être réalisée par tout autre moyen. Par exemple, la première boucle pourrait asservir directement la tension U délivrée par le circuit de régulation 2.

L'unité de commande 5 peut assurer en outre une protection du circuit convertisseur DC/DC isolé 3. Par exemple, en cas de court-circuit au niveau de la charge de sortie Rout, l'unité de commande 5 peut protéger le circuit convertisseur DC/DC isolé 3 en agissant sur les commandes S2 du circuit de régulation 2 de manière à annuler la tension en entrée du circuit convertisseur DC/DC isolé 3 afin de le protéger.

La consigne de courant I2cons peut être transmise directement à un contrôleur 52 qui délivre au circuit de régulation 2 le signal PWM S2 à partir de la consigne de courant I2cons. Cependant, l'unité de commande 5 peut réaliser une deuxième boucle qui asservit le courant délivré par le circuit de régulation 2 à une différence entre la valeur I2mes du courant délivré par le circuit de régulation 2 et la consigne de courant I2cons. En particulier, l'unité de commande 5 compare la consigne de courant I2cons issue de la première boucle avec le courant I2mes mesuré en sortie du circuit de régulation 2. Le courant I2 cons est éventuellement multiplié par un gain K2 avant la comparaison. En fonction du résultat de cette comparaison, le contrôleur 52 détermine le signal S2 de commande du rapport cyclique des interrupteurs M21, M22 du circuit de régulation 2, de façon à ajuster le courant délivré par le circuit de régulation 2 pour obtenir le courant I2cons attendu ; et ainsi obtenir un signal ayant la tension U attendue en sortie du circuit de régulation 2, c'est-à-dire en entrée du circuit convertisseur DC/DC isolé 3. La deuxième boucle d'asservissement pourrait être réalisée par tout autre moyen permettant d'obtenir, en sortie du circuit de régulation 2, la tension U afin d'atteindre la tension Vout en sortie du circuit convertisseur DC/DC isolé 3. En particulier, une boucle de tension pourrait être utilisée. Cependant, la boucle de courant est plus facile à mettre en œuvre car, en petit signal, la boucle de courant permet d'avoir une fonction de transfert du premier ordre alors que la boucle de tension est du deuxième ordre. En outre, le convertisseur de tension 1 pourrait mettre en œuvre la première boucle sans utiliser la deuxième boucle.

Le convertisseur 1 selon l'invention peut être conçu pour couvrir une gamme de fonctionnement. La gamme de fonctionnement correspond à une tension d'entrée Ue du convertisseur 1 comprise entre une valeur minimale $Ue_{min1}$ et une valeur maximale $Ue_{max1}$ ; et à une tension de sortie Vout comprise entre une valeur minimale $Vout_{min1}$ et une valeur maximale $Vout_{max1}$. Par exemple, la tension d'entrée Ue est comprise entre 170 et 450V ; et la tension cible Vout en sortie du circuit convertisseur DC/DC isolé est comprise entre 12 et 16V. Par exemple, la valeur minimale $Vout_{min1}$ de la tension de sortie est comprise entre 8 et 14V et la valeur maximale $Vout_{max1}$ de la tension de sortie est comprise entre 15 et 16V.

Dans l'exemple de la figure 2, le circuit de régulation 2 est un convertisseur abaisseur. Le convertisseur 1, en particulier le circuit de régulation 2, est alors configuré pour pouvoir délivrer la tension de sortie maximale $Vout_{max1}$ avec la tension minimale $Vout_{min1}$.

Les exemples de convertisseurs illustrés en figures 3 et 4 sont similaires à l'exemple de la figure 2 mais diffèrent par le circuit de régulation 2.

La figure 3 illustre un exemple de convertisseur dans lequel le circuit de régulation 2 est un circuit élévateur connu en soi. Le convertisseur 1, en particulier le circuit de régulation 2, est alors configuré pour pouvoir délivrer la tension de sortie minimale $Vout_{min1}$ avec la tension d'entrée maximale $Ue_{max1}$.

La figure 4 illustre un autre exemple de convertisseur dans lequel le circuit de régulation 2 est un circuit élévateur-abaisseur connu en soi. Dans cet exemple, le circuit de régulation 2 peut abaisser ou élever la tension, ce qui facilite l'utilisation du circuit de régulation 2.

Dans les exemples illustrés en figures 2 à 4, la sortie du circuit de régulation 2 est connectée au circuit convertisseur DC/DC isolé 3 au niveau de la branche du circuit convertisseur DC/DC isolé 3 qui comprend les interrupteurs M31, M32.

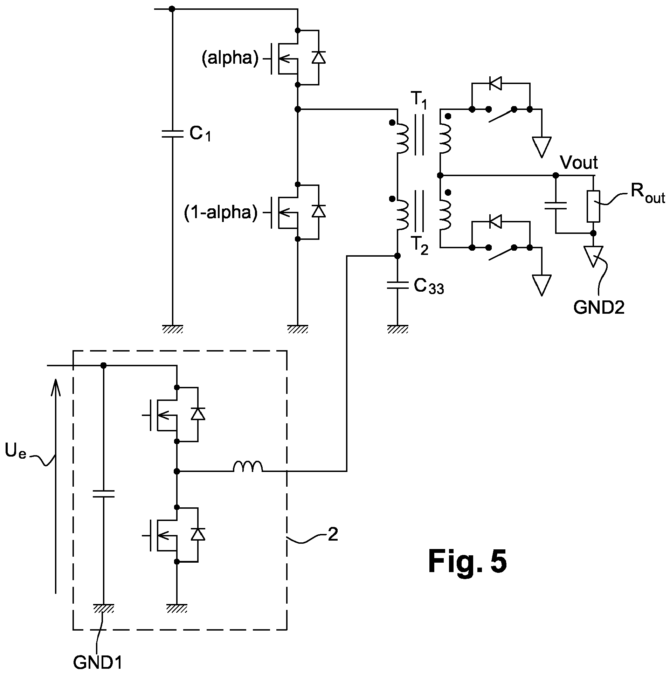

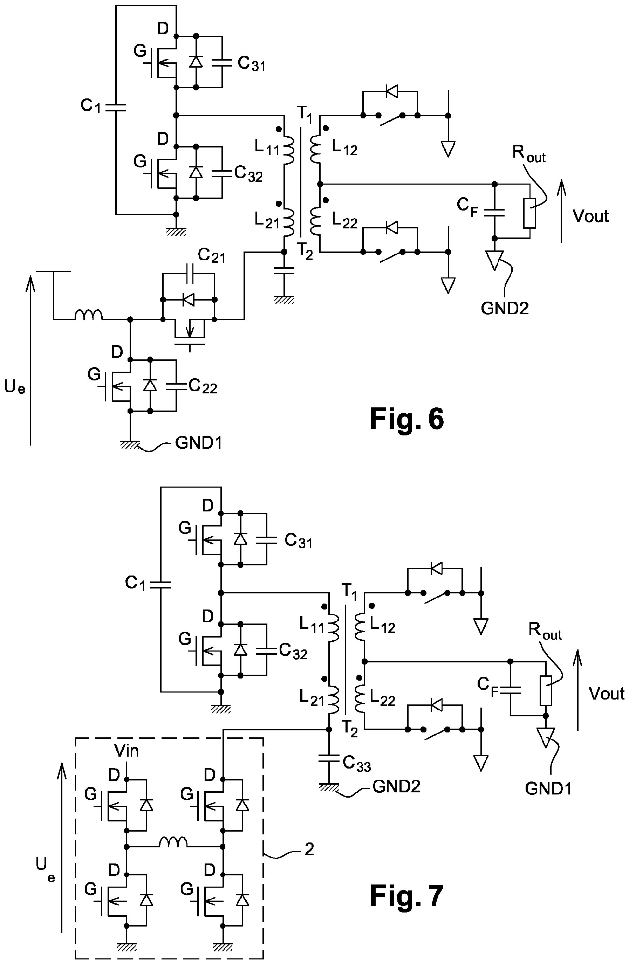

Les exemples illustrés en figures 5 à 7, sont identiques aux exemples des figures 2 à 4 si ce n'est que, dans les figures 5 à 6, la sortie du circuit de régulation 2 est connectée à la branche du circuit convertisseur DC/DC isolé 3 qui comprend les transformateurs T1, T2. En particulier, le circuit de régulation 2 est connecté entre les transformateurs T1, T2 et la capacité C33.

En outre, les diodes D31, D32 sont remplacées par des interrupteurs ; et la sortie haute est connectée au point milieu des secondaires L12, L22, alors que dans les exemples précédents, la sortie haute est connectée à la borne commune des diodes D31, D32. Cependant, les exemples illustrés en figures 5 à 7 pourraient être identiques aux exemples des figures 2 à 4 en ce qui concerne ces caractéristiques.

Selon l'invention, les convertisseurs 1 sont configurés pour fonctionner, sur une première gamme de fonctionnement du convertisseur 1, avec un rapport cyclique du circuit convertisseur DC/DC isolé 3 qui est constant et, sur une deuxième gamme de fonctionnement du convertisseur 1, avec un rapport cyclique qui est variable. Ceci est particulièrement avantageux pour obtenir une plage de tension d'entrée Ue et/ou une plage de tension de sortie Vout qui sont plus grandes par rapport à un fonctionnement dans lequel le rapport cyclique du circuit convertisseur DC/DC isolé est toujours constant.

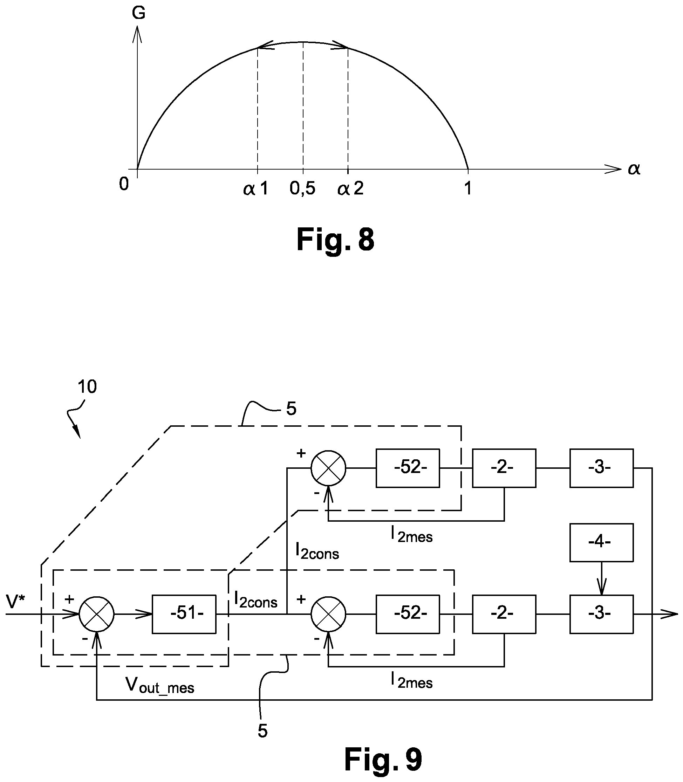

En figure 8, un graphe représente le gain G du circuit convertisseur DC/DC isolé 3 du convertisseur 1 illustré en figure 3, en fonction du rapport cyclique a du circuit convertisseur DC/DC isolé 3. Le gain G correspond au rapport entre la tension Vout en sortie du circuit convertisseur DC/DC isolé 3 sur la tension U en entrée du circuit convertisseur DC/DC isolé 3. La relation entre le gain G et le rapport cyclique a est définie par

$$G = \frac{Vout}{m \times U} = \alpha \times (1 - \alpha),$$

avec m le rapport de transformation d'un transformateur T1, T2.

Par exemple, le circuit convertisseur DC/DC isolé 3 fonctionne avec un rapport cyclique constant égal à 0,5. La gamme de fonctionnement définie précédemment correspond à la première gamme de fonctionnement. Si l'on souhaite atteindre des valeurs hors de la première gamme de fonctionnement, le rapport cyclique a du circuit convertisseur DC/DC isolé 3 est modifié pour atteindre la valeur souhaitée.

Ainsi, le convertisseur 1 a une gamme de fonctionnement totale qui est élargie par rapport aux modes de réalisations décrits précédemment.

Par exemple, dans la première gamme de fonctionnement, la tension d'entrée Ue est comprise entre 170 et 450V ; et la tension cible Vout en sortie du circuit convertisseur DC/DC isolé 3 est comprise entre 12 et 16V. La deuxième gamme de fonctionnement est définie par un seuil inférieur $Ue_{min2}$ de tension d'entrée égal à 450V et par un seuil supérieur $Vout_{max2}$ de tension de sortie égal à 12V. Si, lorsque la tension d'entrée est égale à 450V, l'on souhaite atteindre une valeur cible de tension de sortie inférieure à 12V, par exemple 9V, la valeur cible ne peut être atteinte en modifiant le rapport cyclique du circuit de régulation 2 car le circuit 2 est un convertisseur élévateur qui ne peut qu'élever la tension d'entrée Ue. Par contre, en modifiant le rapport cyclique a du circuit convertisseur DC/DC isolé, le gain du circuit convertisseur DC/DC isolé diminue, ce qui permet de diminuer la tension de sortie Vout du circuit convertisseur DC/DC isolé, et permet donc d'atteindre la valeur cible, par exemple 9V. A cet effet, le rapport cyclique a du circuit convertisseur DC/DC isolé 3 peut être diminué à une valeur inférieure al inférieure à 0,5 ou à une valeur a2 supérieure à 0,5.

Pour des applications de puissance, et selon l'invention, il est avantageux d'entrelacer plusieurs des convertisseurs 1 illustrés en figures 2 à 7. On met des convertisseurs 1 en parallèle et les entrelace afin de limiter les ondulations de courant en sortie et réduire la valeur de la capacité de filtrage CF en sortie du circuit convertisseur DC/DC isolé 3. Dans chaque convertisseur 1, grâce au circuit de régulation 2, le rapport cyclique α du circuit convertisseur DC/DC isolé 3 constant sur une première partie de la gamme de fonctionnement et varie sur une deuxième partie de la gamme de fonctionnement comme décrit précédemment.

La figure 9 illustre un fonctionnement d'un dispositif de conversion 10 qui comprend un entrelacement de convertisseurs 1. Selon l'invention, la première boucle d'asservissement est commune à tous les convertisseurs 1. Ainsi, les circuits de régulation 2 reçoivent la même consigne de courant I2cons. A cet effet, le dispositif 10 peut comprendre un seul contrôleur 51 délivrant une seule consigne de courant I2cons à tous les circuits de régulation 2. Ainsi, un équilibrage en courant entre les convertisseurs de tension 1 est assuré.

Selon l'invention, les convertisseurs 1 fonctionnent avec un déphasage. Les circuits de régulation 2 fonctionnent avec un déphasage de $2\pi/n$, où n est le nombre de convertisseurs 1 entrelacés, qui permet de limiter les fluctuations en sortie du dispositif 10et les problèmes de compatibilité électromagnétique. Les circuits convertisseurs DC/DC isolés 3 fonctionnent avec un déphasage de $\pi/n$ qui permet de limiter les ondulations en sortie du dispositif 10.

L'invention n'est pas limitée aux exemples décrits. En particulier, les boucles de tension peuvent être remplacées par des boucles de courant, inversement les boucles de courant peuvent être remplacées par des boucles de tension. En outre, le circuit convertisseur DC/DC isolé 3 a été décrit avec une structure en demi-pont. Cependant, le circuit convertisseur DC/DC isolé 3 pourrait avoir une structure en pont complet, ou toute autre structure permettant la réalisation de la fonction de convertisseur DC/DC isolé.

D'autres exemples de convertisseurs DC/DC isolé sont similaires à ceux décrits précédemment si ce n'est la différence suivante. Sur la première partie de la période de fonctionnement, le primaire L11 du premier transformateur T1 réalise une inductance stockant de l'énergie et le primaire L21 du second transformateur T2 transfère une énergie vers le secondaire L22 du second transformateur T2. Sur la deuxième partie de la période de fonctionnement, le primaire L21 du second transformateur T2 réalise une inductance stockant de l'énergie, et le primaire L11 du premier transformateur T1 transfère une énergie vers le secondaire L12 du premier transformateur T1. Dans ces exemples de convertisseur DC/DC isolés, un courant magnétisant circulant dans les transformateurs T1, T2 ne permet pas nécessairement une commutation douce des interrupteurs M31, M32 du convertisseur DC/DC isolé.

## Revendications

1. Dispositif (10) de conversion de tension comprenant au moins deux convertisseurs de tension (1), chaque convertisseur de tension (1) comprenant :

   - un circuit convertisseur DC/DC isolé (3) ayant des interrupteurs (M31,M32) dont des successions d'ouverture et de fermeture avec un rapport cyclique (α) permettent de transmettre une énergie à travers le convertisseur DC/DC isolé (3) ;
   - un circuit de régulation (2) de la tension d'entrée du circuit convertisseur DC/DC isolé (3) ;
   et dans lequel le circuit de régulation (2) et le circuit convertisseur DC/DC isolé (3) sont configurés de sorte que :

      - sur une première gamme de fonctionnement d'entrée-sortie du convertisseur (1), le circuit de régulation (2) contrôle la tension de sortie (Vout) du circuit convertisseur DC/DC isolé (3) en modifiant la tension délivrée au circuit convertisseur DC/DC isolé (3), le rapport cyclique du circuit convertisseur DC/DC isolé (3) restant sensiblement égal à une première valeur ($\alpha_{const}$) ; et,
      - sur une deuxième gamme de fonctionnement d'entrée-sortie du convertisseur (1), le circuit convertisseur DC/DC isolé (3) contrôle sa tension de sortie (Vout) en modifiant son rapport cyclique lorsque la tension d'entrée (Ue) du convertisseur (1) est supérieure ou égale à un seuil Vmax et la tension souhaitée en sortie du convertisseur (1) est inférieure ou égale à un seuil Vmin,

   le convertisseur de tension (1) comprenant par ailleurs au moins un premier (T1) et un deuxième (T2) transformateurs d'isolation en série, les interrupteurs (M31, M32) permettant de transmettre une énergie à travers le convertisseur DC/DC isolé (3) par l'intermédiaire des transformateurs d'isolation (T1, T2), et une inductance magnétisante d'au moins un transformateur d'isolation (T1, T2) étant configurée de sorte qu'à la première valeur ($\alpha_{const}$) de rapport cyclique un courant magnétisant circulant dans le transformateur (T1, T2) permette une commutation douce des interrupteurs (M31, M32) du convertisseur DC/DC isolé (3), les au moins deux convertisseurs (1) étant entrelacés ; dispositif (10) dans lequel les circuits de régulation (2) sont configurés pour fonctionner avec un déphasage de $2\pi/n$, et les circuits convertisseurs DC/DC isolé (3) sont configurés pour fonctionner avec un déphasage de $\pi/n$, n étant le nombre de convertisseurs de tension (1) entrelacés ; et

dans lequel les convertisseurs de tension (1) partagent un seul circuit (5) destiné à implémenter une première boucle, de façon à asservir une consigne (I2cons) d'un paramètre électrique d'un signal du circuit de régulation (2) à une différence entre la valeur (Vout mes) de la tension de sortie du circuit convertisseur DC/DC isolé (3) et une consigne (V*) de tension de sortie du circuit convertisseur DC/DC isolé (3), la consigne (I2cons) du paramètre électrique étant telle que le circuit de régulation (2) délivre au circuit convertisseur DC/DC isolé (3) une valeur de tension d'entrée correspondant à une valeur respective de tension de sortie du circuit convertisseur DC/DC isolé (3),

de sorte que les circuits de régulation (2) reçoivent la même consigne (I2cons).

2. Dispositif (10) de conversion de tension selon la revendication précédente, dans lequel chaque circuit convertisseur DC/DC isolé (3) est configuré pour que :

- sur une première partie d'une période de fonctionnement, le primaire (L11) du premier transformateur (T1) réalise une inductance permettant une commutation douce des interrupteurs (M31, M32) et le primaire (L21) du second transformateur (T2) transfère une énergie vers le secondaire (L22) du second transformateur (T2) ;
- sur une deuxième partie de la période de fonctionnement, le primaire (L21) du second transformateur (T2) réalise une inductance permettant une commutation douce des interrupteurs (M31, M32), et le primaire (L11) du premier transformateur (T1) transfère une énergie vers le secondaire (L12) du premier transformateur (T1).

3. Procédé de conversion de tension comprenant des étapes dans lesquelles :

- on fournit un dispositif (10) de conversion de tension comprenant au moins deux convertisseurs de tension (1), chaque convertisseur de tension (1) comprenant :

un circuit convertisseur DC/DC isolé (3) ayant des interrupteurs (M31, M32) dont des successions d'ouverture et de fermeture avec un rapport cyclique ($\alpha$) permettent de transmettre une énergie à travers le convertisseur DC/DC isolé (3) ; et

un circuit de régulation (2) de la tension d'entrée du circuit convertisseur DC/DC isolé (3) ;

- sur une première gamme de fonctionnement d'entrée-sortie du convertisseur (1), le circuit de régulation (2) contrôle la tension de sortie (Vout) du circuit convertisseur DC/DC isolé (3) en modifiant la tension délivrée au circuit convertisseur DC/DC isolé (3), le rapport cyclique du circuit convertisseur DC/DC isolé (3) restant sensiblement égale à une première valeur ($\alpha$const) ; et,
- sur une deuxième gamme de fonctionnement d'entrée-sortie du convertisseur (1), le circuit convertisseur DC/DC isolé (3) contrôle sa tension de sortie (Vout) en modifiant son rapport cyclique ;

procédé dans lequel :

la deuxième gamme de fonctionnement du convertisseur est définie par une tension d'entrée (Ue) du convertisseur (1) qui est supérieure ou égale à un seuil Vmax, et une tension souhaitée en sortie du convertisseur qui est inférieure ou égale à un seuil Vmin ;

le contrôle de la tension de sortie du circuit convertisseur DC/DC isolé (3) comprend une première boucle asservissant la consigne (I2cons) d'un paramètre électrique d'un signal du circuit de régulation (2) à une différence entre la valeur (Vout_mes) de la tension de sortie du circuit convertisseur DC/DC isolé (3) et une consigne (V*) de tension de sortie du circuit convertisseur DC/DC isolé (3), la consigne (I2cons) du paramètre électrique étant telle que le circuit convertisseur DC/DC isolé (3) reçoit une tension d'entrée ayant une valeur correspondant à une valeur respective de tension de sortie du circuit convertisseur DC/DC isolé (3) ;

le circuit convertisseur DC/DC isolé (3) comprend au moins un premier et un deuxième transformateurs d'isolation (T1, T2) en série, les interrupteurs (M31, M32) permettant de transmettre une énergie à travers le convertisseur DC/DC isolé (3) par l'intermédiaire des transformateurs d'isolation (T1, T2), une inductance magnétisante d'au moins un transformateur d'isolation (T1, T2) étant configurée de sorte qu'à la première valeur (αconst) de rapport cyclique un courant magnétisant circulant dans le transformateur (T1, T2) permette une commutation douce des interrupteurs (M31, M32) du convertisseur DC/DC isolé (3) ;

les au moins deux convertisseurs (1) sont entrelacés ;

les circuits de régulation (2) fonctionnent avec un déphasage de 2π/n, et les circuits convertisseurs DC/DC isolés (3) fonctionnent avec un déphasage de n/n, n étant le nombre de convertisseurs de tension (1) entrelacés ; et

les convertisseurs de tension (1) partagent un seul circuit (5) destiné à implémenter la première boucle, de sorte que les circuits de régulation (2) reçoivent la même consigne (I2cons).

4. Procédé selon la revendication 3, dans lequel le contrôle de la tension de sortie (Vout) du circuit convertisseur DC/DC isolé (3) comprend la modification d'une tension délivrée par le circuit de régulation (2) au niveau d'une branche du circuit convertisseur DC/DC isolé (3) comprenant au moins une partie des interrupteurs (M31, M32) du circuit convertisseur DC/DC isolé (3).

5. Procédé selon la revendication 3, dans lequel le contrôle de la tension de sortie (Vout) du circuit convertisseur DC/DC isolé (3) comprend la modification d'une tension délivrée par le circuit de régulation (2) au niveau d'une branche du circuit convertisseur DC/DC isolé (3) comprenant les transformateurs du circuit convertisseur DC/DC isolé (3).

**Patentansprüche**

1. Vorrichtung (10) zur Spannungsumwandlung, die mindestens zwei Spannungswandler (1) enthält, wobei jeder Spannungswandler (1) enthält:

- eine isolierte DC/DC-Wandlerschaltung (3), die Schalter (M31, M32) hat, deren Öffnungs- und Schließfolgen mit einem Taktverhältnis (α) es ermöglichen, eine Energie über den isolierten DC/DC-Wandler (3) zu übertragen;

- einen Regelkreis (2) der Eingangsspannung der isolierten DC/DC-Wandlerschaltung (3);

und wobei der Regelkreis (2) und die isolierte DC/DC-Wandlerschaltung (3) so konfiguriert sind, dass:

- in einem ersten Eingangs-Ausgangs-Betriebsbereich des Wandlers (1) der Regelkreis (2) die Ausgangsspannung (Vout) der isolierten DC/DC-Wandlerschaltung (3) steuert, indem er die an die isolierte DC/DC-Wandlerschaltung (3) gelieferte Spannung ändert, wobei das Taktverhältnis der isolierten DC/DC-Wandlerschaltung (3) im Wesentlichen gleich einem ersten Wert ($\alpha_{const}$) bleibt; und

- in einem zweiten Eingangs-Ausgangs-Betriebsbereich des Wandlers (1) die isolierte DC/DC-Wandlerschaltung (3) ihre Ausgangsspannung (Vout) steuert, indem sie ihr Taktverhältnis ändert, wenn die Eingangsspannung (Ue) des Wandlers (1) höher als eine oder gleich einer Schwelle Vmax ist und die gewünschte Spannung am Ausgang des Wandlers (1) niedriger als eine oder gleich einer Schwelle Vmin ist,

wobei der Spannungswandler (1) außerdem mindestens einen ersten (T1) und einen zweiten (T2) Isolationstransformator in Reihe enthält, wobei die Schalter (M31, M32) es ermöglichen, eine Energie über den isolierten DC/DC-Wandler (3) mittels der Isolationstransformatoren (T1, T2) zu übertragen, und eine Magnetisierungsinduktivität mindestens eines Isolationstransformators (T1, T2) so konfiguriert ist,

dass beim ersten Taktverhältniswert ($\alpha_{cons}$) ein im Transformator (T1, T2) fließender Magnetisierungsstrom ein weiches Schalten der Schalter (M31, M32) des isolierten DC/DC-Wandlers (3) ermöglicht,

wobei die mindestens zwei Wandler (1) verschachtelt sind; Vorrichtung (10), bei der die Regelkreise (2) konfiguriert sind, um mit einer Phasenverschiebung von 2π/n zu arbeiten, und die isolierten DC/DC-Wandlerschaltungen (3) konfiguriert sind, mit einer Phasenverschiebung von π/n zu arbeiten, wobei n die Anzahl von verschachtelten Spannungswandlern (1) ist; und wobei die Spannungswandler (1) sich eine einzige Schaltung (5) teilen, die dazu bestimmt ist, eine erste Schleife zu implementieren, um einen Sollwert (I2cons) eines elektrischen Parameters eines Signals des Regelkreises (2) auf eine Differenz zwischen dem Wert (Vout mes) der Ausgangsspannung der isolierten DC/DC-Wandlerschaltung (3) und einem Ausgangsspannungssollwert (V*) der isolierten DC/DC-Wandlerschaltung (3) zu regeln, wobei der Sollwert (I2cons) des elektrischen Parameters so ist, dass der Regelkreis (2) an die isolierte DC/DC-Wandlerschaltung (3) einen Eingangsspannungswert liefert, der einem jeweiligen Ausgangsspannungswert der isolierten DC/DC-Wandlerschaltung (3) entspricht,

so dass die Regelkreise (2) den gleichen Sollwert (I2cons) empfangen.

2. Vorrichtung (10) zur Spannungsumwandlung nach dem vorhergehenden Anspruch, wobei jede isolierte DC/DC-Wandlerschaltung (3) konfiguriert ist, damit:

- in einem ersten Teil einer Betriebsperiode die Primärwicklung (L11) des ersten Transformators (T1) eine Induktivität erzeugt, die eine weiche Schaltung der Schalter (M31, M32) ermöglicht, und die Primärwicklung (L21) des zweiten Transformators (T2) eine Energie an die Sekundärwicklung (L22) des zweiten Transformators (T2) überträgt;
- in einem zweiten Teil der Betriebsperiode die Primärwicklung (L21) des zweiten Transformators (T2) eine Induktivität erzeugt, die eine weiche Schaltung der Schalter (M31, M32) ermöglicht, und die Primärwicklung (L11) des ersten Transformators (T1) eine Energie an die Sekundärwicklung (L12) des ersten Transformators (T1) überträgt.

3. Verfahren zur Spannungsumwandlung, das Schritte enthält, in denen:

- eine Spannungswandlervorrichtung (10) bereitgestellt wird, die mindestens zwei Spannungswandler (1) enthält, wobei jeder Spannungswandler (1) enthält:

eine isolierte DC/DC-Wandlerschaltung (3), die Schalter (M31, M32) hat, deren Öffnungs- und Schließfolgen mit einem Taktverhältnis ($\alpha$) es ermöglichen, eine Energie über den isolierten DC/DC-Wandler (3) zu übertragen; und
einen Regelkreis (2) der Eingangsspannung der isolierten DC/DC-Wandlerschaltung (3);

- in einem ersten Eingangs-Ausgangs-Betriebsbereich des Wandlers (1) der Regelkreis (2) die Ausgangsspannung (Vout) der isolierten DC/DC-Wandlerschaltung (3) steuert, indem er die an die isolierte DC/DC-Wandlerschaltung (3) gelieferte Spannung verändert, wobei das Taktverhältnis der isolierten DC/DC-Wandlerschaltung (3) im Wesentlichen gleich einem ersten Wert ($\alpha_{cons}$) bleibt; und
- in einem zweiten Eingangs-Ausgangs-Betriebsbereich des Wandlers (1) die isolierte DC/DC-Wandlerschaltung (3) ihre Ausgangsspannung (Vout) steuert, indem sie ihr Taktverhältnis ändert;
Verfahren, bei dem:

der zweite Betriebsbereich des Wandlers durch eine Eingangsspannung (Ue) des Wandlers (1), die höher als eine oder gleich einer Schwelle Vmax ist, und eine gewünschte Spannung am Ausgang des Wandlers definiert wird, die niedriger als eine oder gleich einer Schwelle Vmin ist;
die Steuerung der Ausgangsspannung der isolierten DC/DC-Wandlerschaltung (3) eine erste Schleife enthält, die den Sollwert (I2cons) eines elektrischen Parameters eines Signals des Regelkreises (2) auf eine Differenz zwischen dem Wert (Vout_mes) der Ausgangsspannung der isolierten DC/DC-Wandlerschaltung (3) und einem Ausgangsspannungssollwert (V*) der isolierten DC/DC-Wandlerschaltung (3) regelt, wobei der Sollwert (I2cons) des elektrischen Parameters so ist, dass die isolierte DC/DC-Wandlerschaltung (3) eine Eingangsspannung empfängt, die einen Wert entsprechend einem jeweiligen Ausgangsspannungswert der isolierten DC/DC-Wandlerschaltung (3) hat;
die isolierte DC/DC-Wandlerschaltung (3) mindestens einen ersten und einen zweiten Isolationstransformator (T1, T2) in Reihe enthält, wobei die Schalter (M31, M32) es ermöglichen, eine Energie über den isolierten DC/DC-Wandler (3) mittels der Isolationstransformatoren (T1, T2) zu übertragen, wobei eine Magnetisierungsinduktivität mindestens eines Isolationstransformators (T1, T2) so konfiguriert ist, dass beim ersten Taktverhältniswert ($\alpha_{cons}$) ein im Transformator (T1, T2) fließender Magnetisierungsstrom ein weiches Schalten der Schalter (M31, M32) des isolierten DC/DC-Wandlers (3) ermöglicht;
die mindestens zwei Wandler (1) verschachtelt sind;
die Regelkreise (2) mit einer Phasenverschiebung von $2\pi/n$ arbeiten, und die isolierten DC/DC-Wandlerschaltungen (3) mit einer Phasenverschiebung von $\pi/n$ arbeiten, wobei n die Anzahl von verschachtelten Spannungswandlern (1) ist; und
die Spannungswandler (1) sich eine einzige Schaltung (5) teilen, die dazu bestimmt ist, die erste Schleife zu implementieren, so dass die Regelkreise (2) den gleichen Sollwert (I2cons) empfangen.

4. Verfahren nach Anspruch 3, wobei die Steuerung der Ausgangsspannung (Vout) der isolierten DC/DC-Wandlerschaltung (3) die Änderung einer vom Regelkreis (2) im Bereich eines Zweigs der isolierten DC/DC-Wandlerschaltung (3) gelieferten Spannung enthält, der mindestens einen Teil der Schalter (M31, M32) der isolierten DC/DC-Wandlerschaltung (3) enthält.

**5.** Verfahren nach Anspruch 3, wobei die Steuerung der Ausgangsspannung (Vout) der isolierten DC/DC-Wandlerschaltung (3) die Änderung einer vom Regelkreis (2) im Bereich eines Zweigs der isolierten DC/DC-Wandlerschaltung (3) gelieferten Spannung enthält, der die Transformatoren der isolierten DC/DC-Wandlerschaltung (3) enthält.

**Claims**

**1.** Voltage conversion device (10) comprising at least two voltage converters (1), each voltage converter (1) comprising:

- an isolated DC/DC converter circuit (3) having switches (M31, M32), opening and closing sequences of which with a duty cycle ($\alpha$) make it possible to transmit power through the isolated DC/DC converter (3); and
- a regulation circuit (2) for regulating the input voltage of the isolated DC/DC converter circuit (3) ;

and wherein the regulation circuit (2) and the isolated DC/DC converter circuit (3) are configured such that:

- over a first input-output operating range of the converter (1), the regulation circuit (2) controls the output voltage (Vout) of the isolated DC/DC converter circuit (3) by modifying the voltage delivered to the isolated DC/DC converter circuit (3), the duty cycle of the isolated DC/DC converter circuit (3) remaining substantially equal to a first value ($\alpha_{const}$); and,
- over a second input-output operating range of the converter (1), the isolated DC/DC converter circuit (3) controls its output voltage (Vout) by modifying its duty cycle when the input voltage (Ue) of the converter (1) is higher than or equal to a threshold Vmax and the desired voltage at the output of the converter (1) is lower than or equal to a threshold Vmin, the voltage converter (1) comprising, in addition, at least a first (T1) and a second (T2) isolation transformer in series, the switches (M31, M32) making it possible to transmit power through the isolated DC/DC converter (3) via the isolation transformers (T1, T2), and a magnetizing inductance of at least one isolation transformer (T1, T2) being configured such that, at the first duty cycle value ($\alpha_{const}$), a magnetizing current flowing through the transformer (T1, T2) allows soft switching of the switches (M31, M32) of the isolated DC/DC converter (3), the at least two converters (1) being interlocked;

in which device (10) the regulation circuits (2) are configured to operate with a phase difference of $2\pi/n$, and the isolated DC/DC converter circuits (3) are configured to operate with a phase difference of $\pi/n$, n being the number of interlocked voltage converters (1); and wherein the voltage converters (1) share a single circuit (5) intended to implement a first loop, so as to servocontrol a setpoint (I2cons) of an electrical parameter of a signal of the regulation circuit (2) to a difference between the value (Vout_mes) of the output voltage of the isolated DC/DC converter circuit (3) and an output voltage setpoint (V*) of the isolated DC/DC converter circuit (3), the setpoint (I2cons) of the electrical parameter being such that the regulation circuit (2) delivers, to the isolated DC/DC converter circuit (3), an input voltage value corresponding to a respective output voltage value of the isolated DC/DC converter circuit (3), such that the regulation circuits (2) receive the same setpoint (I2cons).

**2.** Voltage conversion device (10) according to the preceding claim, wherein each isolated DC/DC converter circuit (3) is configured so that:

- over a first part of an operating period, the primary (L11) of the first transformer (T1) produces an inductance allowing soft switching of the switches (M31, M32) and the primary (L21) of the second transformer (T2) transfers power to the secondary (L22) of the second transformer (T2); and
- over a second part of the operating period, the primary (L21) of the second transformer (T2) produces an inductance allowing soft switching of the switches (M31, M32), and the primary (L11) of the first transformer (T1) transfers power to the secondary (L12) of the first transformer (T1).

**3.** Voltage conversion method comprising steps in which:

- a voltage conversion device (10) comprising at least two voltage converters (1) is provided, each voltage converter (1) comprising:

an isolated DC/DC converter circuit (3) having switches (M31, M32), opening and closing sequences of which with a duty cycle ($\alpha$) make it possible to transmit power through the isolated DC/DC converter (3); and a regulation circuit (2) for regulating the input voltage of the isolated DC/DC converter circuit (3);

- over a first input-output operating range of the converter (1), the regulation circuit (2) controls the output voltage (Vout) of the isolated DC/DC converter circuit (3) by modifying the voltage delivered to the isolated DC/DC converter circuit (3), the duty cycle of the isolated DC/DC converter circuit (3) remaining substantially equal to a first value ($\alpha$const);

and,

- over a second input-output operating range of the converter (1), the isolated DC/DC converter circuit (3) controls its output voltage (Vout) by modifying its duty cycle;

in which method:

the second operating range of the converter is defined by an input voltage (Ue) of the converter (1) which is higher than or equal to a threshold Vmax, and a desired voltage at the output of the converter which is lower than or equal to a threshold Vmin;

the control of the output voltage of the isolated DC/DC converter circuit (3) comprises a first loop servocontrolling the setpoint (I2cons) of an electrical parameter of a signal of the regulation circuit (2) to a difference between the value (Vout_mes) of the output voltage of the isolated DC/DC converter circuit (3) and an output voltage setpoint (V*) of the isolated DC/DC converter circuit (3), the setpoint (I2cons) of the electrical parameter being such that the isolated DC/DC converter circuit (3) receives an input voltage having a value corresponding to a respective output voltage value of the isolated DC/DC converter circuit (3);

the isolated DC/DC converter circuit (3) comprises at least a first and a second isolation transformer (T1, T2) in series, the switches (M31, M32) making it possible to transmit power through the isolated DC/DC converter (3) via the isolation transformers (T1, T2),

a magnetizing inductance of at least one isolation transformer (T1, T2) being configured such that, at the first duty cycle value ($\alpha$const), a magnetizing current flowing through the transformer (T1, T2) allows soft switching of the switches (M31, M32) of the isolated DC/DC converter (3);

the at least two converters (1) are interlocked;

the regulation circuits (2) operate with a phase difference of $2\pi/n$, and the isolated DC/DC converter circuits (3) operate with a phase difference of $\pi/n$, n being the number of interlocked voltage converters (1); and

the voltage converters (1) share a single circuit (5) intended to implement the first loop, such that the regulation circuits (2) receive the same setpoint (I2cons).

4. Method according to Claim 3, wherein the control of the output voltage (Vout) of the isolated DC/DC converter circuit (3) comprises modifying a voltage delivered by the regulation circuit (2) to a branch of the isolated DC/DC converter circuit (3) comprising at least some of the switches (M31, M32) of the isolated DC/DC converter circuit (3).

5. Method according to Claim 3, wherein the control of the output voltage (Vout) of the isolated DC/DC converter circuit (3) comprises modifying a voltage delivered by the regulation circuit (2) to a branch of the isolated DC/DC converter circuit (3) comprising the transformers of the isolated DC/DC converter circuit (3).

**Fig. 1**

14

**Fig. 2**

**Fig. 3**

EP 3 161 950 B1

**Fig. 4**

Fig. 5

**Fig. 6**

**Fig. 7**

Fig. 8

Fig. 9

**EP 3 161 950 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130336017 A1

- US 5754413 A